# EUROPEAN PATENT SPECIFICATION

(11) **EP 2 761 992 B1**
(45) Date of publication and mention of the grant of the patent: **12.04.2017**
(21) Application number: 14153606.0
(22) Date of filing: 03.02.2014
(51) Int. Cl.: A01G 1/00, A01G 7/04, A01G 31/00, A01G 33/00, A01H 3/02

(54) **Method for cultivating plant**
Verfahren zum Züchten von Pflanzen
Procédé pour cultiver des plantes

(30) Priority: 04.02.2013 JP 2013019719
(43) Date of publication of application: 06.08.2014
(73) Proprietor: SHOWA DENKO K.K., Tokyo 105-8518 (JP)
(72) Inventor: Takeuchi, Ryouichi, Tokyo, 105-8518 (JP); Ara, Hironori, Tokyo, 105-8518 (JP)
(74) Representative: Strehl Schübel-Hopf & Partner

(56) References cited:
- US-A1- 2012 218 750

## Description

### Technical Field of the Invention

This invention relates to a method for cultivating a plant. More particularly it relates to a method for cultivating a plant while the plant is irradiated with an artificial light using a light-emitting lamp for plant cultivation whereby growth of the plant is promoted.

### Background Art

Light-emitting technology has heretofore been adopted for growing seedlings or promoting growth of plants whereby a cultivation period of plants can be shortened and frequency of harvesting in the same farm can be increased. Plants can be grown to a large size within a predetermined period of time, and the crop yield can be enhanced.

As a plant cultivation technique utilizing artificial light irradiation, an illumination lamp facility for irradiating a plant alternately with green light and white light has been proposed, for example, in patent document 1. In this illumination lamp facility, plants are irradiated alternately with green light having a wavelength of 500 to 570 nm and white light having a wavelength of 300 to 800 nm whereby simulated day and night are created. Consequently the sugar translocation within plant bodies is smoothly effected and growth of plants is enhanced.

Another proposal has been proposed in patent document 2, which comprises an illumination lamp facility equipped with a light emitting diode (LED) for irradiating plants alternately or concurrently with blue light having a wavelength of 400-480 nm and red light having a wavelength of 620-700 nm to supply light energy for cultivation, growth, and tissue cultivation of plants. This illumination lamp facility is characterized as irradiating plants selectively with light having a wavelength corresponding to the light absorption peak of chlorophyll, i.e., in the vicinity of 450 nm and the vicinity of 660 nm whereby the plants are cultivated with an enhanced energy efficiency.

It is described in patent document 2 that blue light and red light may be irradiated either concurrently or alternately (see patent document 2, claim 1). More specifically it is described in this patent document that single radiation of blue light, single radiation of red light and concurrent radiation of blue light with red light are compared with each other, and it was verified that the concurrent radiation of blue light with red light exhibited an enhanced effect on healthy growth of plants, which is similar to the growth achieved by sun light radiation, whereas the single radiation of blue light or red light brings about unhealthy growth such as spindly growth of plants (see patent document 2, paragraph [0011]). It is further described in patent document 2 that blue light and red light are alternately radiated by blinking by means of a blinking pattern at a high frequency of several megahertz or more (see patent document 2, paragraph [0006]).

However, patent document 2 is silent on a method of alternately conducting a blue light irradiation step and a red light irradiation step, and thus, growth promoting effects achieved by the alternate light irradiation method are not verified. US-A1-2012/0218750 discloses a plant cultivation method whereby plants are concurrently irradiated with red, blue and far-red light.

### Prior art documents

### Patent documents

Patent document 1: JP 1994-276858A
Patent document 2: JP 1996-103167A

### Technical Problem and its Solution

To enhance the productivity in plant cultivation, a plant cultivation method utilizing artificial light irradiation, which is simple and easy, and exhibits enhanced energy efficiency and excellent growth promotion effect, is eagerly desired.

### Brief Summary of the Invention

A primary object of the present invention is to provide an improved method of cultivating a plant using an artificial light-irradiating facility, whereby a plant growth promotion effect can be greatly enhanced.

The present inventors made extensive research for providing an improved method for cultivating a plant using an artificial light-irradiating lamp facility with enhanced growth promotion effect, and have found that an enhanced growth promotion effect is achieved by a plant-cultivation method comprising a step (A) of irradiating a plant with a red light and a step (B) of irradiating the plant with a blue light, wherein the two steps (A) and (B) are independently and separately carried out for a predetermined period of time, and further found that the growth promotion effect varies depending upon the cultivation conditions, especially the light irradiation conditions.

Thus, an excellent growth promotion effect has been obtained by additionally irradiating far-red light concurrently either with red light at the red light irradiation step (A) or with blue light at the blue light irradiation step (B), or, with red light and blue light at the red light irradiation step (A) and the blue light irradiation step (B), respectively. Based on these findings, the present invention has been completed.

In accordance with the present invention, there are provided the following plant-cultivating methods.
(1). A method of cultivating a plant comprising a step (A) of irradiating a plant with a red light and a step (B) of irradiating a plant with a blue light, wherein the red light irradiation step (A) and the blue light irradiation step (B) are independently and separately carried out for a predetermined period of time under cultivation conditions such that far-red light is additionally irradiated concurrently either with red light at the red light irradiation step (A) or with blue light at the blue light irradiation step (B), or with red light at the red light irradiation step (A) and blue light at the blue light irradiation step (B), respectively.
(2). The method of cultivating a plant as mentioned above in (1), wherein, when far-red light is additionally irradiated concurrently with red light at the red light irradiation step (A), the emission intensity of red light at said step (A) of concurrent red light/far-red light irradiation is larger than the emission intensity of far-red light at said step (A) of concurrent red light/far-red light irradiation, and a ratio of the emission intensity of red light at said step (A) of concurrent red light/far-red light irradiation to the total light emission intensity at said step (A) of concurrent red light/far-red light irradiation is at least 50%.
(3). The method of cultivating a plant as mentioned above in (1), wherein, when far-red light is additionally irradiated concurrently with blue light at the blue light irradiation step (B), the emission intensity of blue light at said step (B) of concurrent blue light/far-red light irradiation is larger than the emission intensity of far-red light at said step (B) of concurrent blue light/far-red light irradiation, and a ratio of the emission intensity of blue light at said step (B) of concurrent blue light/far-red light irradiation to the total light emission intensity at said step (B) of concurrent red light/far-red light irradiation is at least 50%.
(4). The method of cultivating a plant as mentioned above in any one of (1) to (3), wherein the red light has a center wavelength in the range of 620 nm to 700 nm, the blue light has a center wavelength in the range of 400 nm to 480 nm, and the far-red light has a center wavelength in the range of 720 nm to 780 nm.
(5). The method of cultivating a plant as mentioned above in any one of (1) to (4), wherein the red light is irradiated by using a semiconductor light emitting element having an AlGaInP light emitting layer, the blue light is irradiated by using a semiconductor light emitting element having a GaInN light emitting layer, and the far-red light is irradiated by using a semiconductor light emitting element having an AlGaAs light emitting layer.
(6). The method of cultivating a plant as mentioned above in any one of (1) to (5), wherein the red light irradiation step (A), the blue light irradiation step (B), and the step of concurrent irradiation of far-red light with red light or with blue light are alternately and repeatedly carried out over a period of at least one hour for each irradiation time.
(7). The method of cultivating a plant as mentioned above in any one of (1) to (6), wherein the red light irradiation step (A), the blue light irradiation step (B), and the step of concurrent irradiation of far-red light with red light or with blue light are carried out using an illumination lamp facility having red light emitting elements, blue light emitting elements and far-red light emitting elements, which are capable of being independently operated, and wherein a ratio of the total emission intensity of red light to the total emission intensity of blue light is in the range of 1:1 to 9:1, and a ratio of the total emission intensity of blue light to the total emission intensity of far-red light is in the range of 1:1 to 9:1.

By the term "plant(s)" as used in this specification, we mean plants in a broad sense which include leaf plants, fruit plants, grains and algae. The plant cultivation method according to the present invention exhibits especially marked growth promotion effect for phytoplankton such as algae, and mosses and euglena.

### Effect of the Invention

Plant growth promotion effect can be greatly enhanced by independently and separately carrying out the red light irradiation step (A) and the blue light irradiation step (B), and further by additionally irradiating far-red light concurrently with red light at the red light irradiation step (A) and/or with blue light at the blue light irradiation step (B).

It is presumed that the photosynthesis reactions by irradiation of red light and irradiation of blue light irradiation can be most effectively performed by the concurrent irradiation of far-red light having a function of activating phytochrome A, and consequently, the growth promotion effect is more enhanced.

### Brief Description of the Drawings

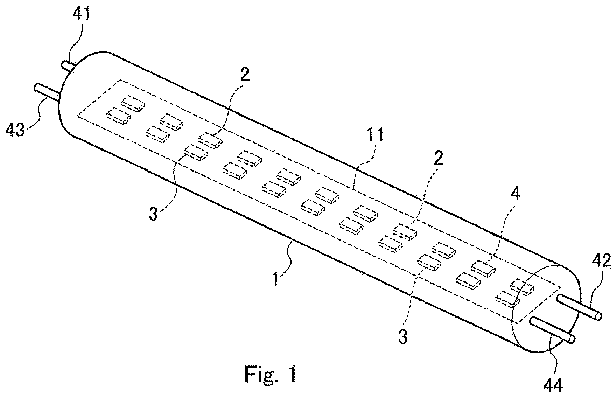

Fig. 1 is a perspective view of an example of an illumination lamp having red light emitting elements and blue light emitting elements as used in the plant-cultivation method of the present invention.

### Embodiments of the Invention

Preferred modes for practicing the invention will be described with reference to the accompanying drawings. The described modes by no means limit the scope of the invention.

The plant cultivation method of the present invention is characterized by comprising a step (A) of irradiating the plant with a red light and a step (B) of irradiating the plant with a blue light, wherein the red light irradiation step (A) and the blue light irradiation step (B) are independently and separately carried out for a predetermined period of time under cultivation conditions such that far-red light is additionally irradiated concurrently either with red light at the red light irradiation step (A) or with blue light at the blue light irradiation step (B), or with red light and blue light at the red light irradiation step (A) and the blue light irradiation step (B), respectively.

When red light and blue light are irradiated on a plant, the light absorption curve of chlorophyll has different absorption peaks in the vicinities of 450 nm and 660 nm. It now has been found that, when far-red light is irradiated concurrently with the red light or blue light, far-red light does not interfere with the photosynthesis reactions caused by irradiation of red light and irradiation of blue light irradiation, and, the far-red light more enhances the growth promotion effect.

The irradiation of far-red light can be carried out concurrently with irradiation of red light at the red light irradiation step (A) and/or with irradiation of blue light at the blue light irradiation step (B). Thus, the far-red light is irradiated concurrently either with red light at the red light irradiation step (A) or with blue light at the blue light irradiation step (B), or with red light and blue light at the red light irradiation step (A) and the blue light irradiation step (B), respectively.

When far-red light is additionally irradiated concurrently with red light at the red light irradiation step (A), it is preferable that the emission intensity of red light at said step (A) of concurrent red light/far-red light irradiation is larger than the emission intensity of far-red light at said step (A) of concurrent red light/far-red light irradiation, and further that a ratio of the emission intensity of red light at said step (A) of concurrent red light/far-red light irradiation to the total light emission intensity at said step (A) of concurrent red light/far-red light irradiation is at least 50%.

At the step (A) of concurrent red light/far-red light irradiation, other lights such as, for example, blue light or green light can be irradiated in addition to the red light and far-red light, provided that a ratio of the emission intensity of red light to the total emission intensities at said step (A) is at least 50%. Thus, the emission intensity ratio of additional light, for example, blue light, should be smaller than the emission intensity ratio of red light at said step (A).

However, in the case when other light, for example, blue light, is irradiated in addition to the red light and far-red light at said step (A), it is preferable that the emission intensity of said other light is smaller than the emission intensity of far-red light, and further that the emission intensity of said other light is not larger than approximately 20%, more preferably, not larger than 10%, based on the total light emission intensity at said step (A). An example of the light irradiated at the step (A) of concurrent red light/far-red light irradiation is comprised of 60% of red light, 35% of far-red light and 5% of blue light as ratios of the light emission intensities.

When far-red light is additionally irradiated concurrently with blue light at the blue light irradiation step (B), it is preferable that the emission intensity of blue light at said step (B) of concurrent blue light/far-red light irradiation is larger than the emission intensity of far-red light at said step (B) of concurrent blue light/far-red light irradiation, and further that a ratio of the emission intensity of blue light at said step (B) of concurrent blue light/far-red light irradiation to the total light emission intensity at said step (B) of concurrent blue light/far-red light irradiation is at least 50%.

At the step (B) of concurrent blue light/far-red light irradiation, other lights such as, for example, red light or green light can be irradiated in addition to the blue light and far-red light, provided that a ratio of the emission intensity of blue light to the total emission intensities at said step (B) is at least 50%. Thus, the emission intensity ratio of additional light, for example, red light, should be smaller than the emission intensity ratio of blue light at said step (B).

However, in the case when other light, for example, red light, is irradiated in addition to the blue light and far-red light at said step (B), it is preferable that the emission intensity of said other light is smaller than the emission intensity of far-red light, and further that the emission intensity of said other light is not larger than approximately 20%, more preferably, not larger than 10%, based on the total light emission intensity at said step (B). An example of the light irradiated at the step (B) of concurrent blue light/far-red light irradiation is comprised of 60% of blue light, 35% of far-red light and 5% of red light as ratios of the light emission intensities.

As luminous bodies used in the plant-cultivation method, those which have a small half-value width of emission spectrum are preferably used because color mixing can be minimized or rendered zero. Such luminous bodies include, for example, lasers and light emitting diodes. In view of emission efficiency and cost, light emitting diodes are most preferably used. More specifically, the red light is irradiated by using a semiconductor light emitting element having an AlGaInP light emitting layer, the blue light is irradiated by using a semiconductor light emitting element having a GaInN light emitting layer, and the far-red light is irradiated by using a semiconductor light emitting element having an AlGaAs light emitting layer.

By the term "light emission intensity" or "emission intensity" as used in the specification, we mean those which are expressed by photosynthetic photon flux density (PPFD; in µmol/m²s).

The red light as used in the cultivation method of the present invention has a center wavelength in the range of 620 nm to 700 nm, the blue light has a center wavelength in the range of 400 nm to 480 nm, and the far-red light has a center wavelength in the range of 710 nm to 800 nm, preferably 720 nm to 780 nm.

### Illumination lamp for plant cultivation

In the plant-cultivation method of the present invention, an illumination lamp facility for plant cultivation having red light emitting elements and blue light emitting elements, both of which are capable of being independently operated, is used for independently (preferably, alternately and repeatedly) carrying out the red light irradiation step (A) and the blue light irradiation step (B) for a predetermined period of time.

The illumination lamp facility as used in the plant-cultivation method of the present invention further has far-red light emitting elements capable of being preferably independently operated for independently (preferably, alternately and repeatedly) carrying out the far-red light irradiation concurrently with red light at the red light irradiation step (A) or with blue light at the blue light irradiation step (B), or with red light and blue light at the red light irradiation step (A) and the blue light irradiation step (B), respectively.

Fig. 1 is a perspective view of a preferable example of an illumination lamp for plant cultivation which has red light emitting elements 2, blue light emitting elements 3 and far-red light emitting elements 4. This illumination lamp 1 has a light irradiation part 11 having a rectangular shape in the planar view, and further has a control part (not shown) for controlling the light irradiation part 11.

An excellent plant-cultivation promotion effect can be attained by the provision of the red light emitting elements 2, the blue light emitting elements 3 and the far-red light emitting elements 4, which are capable of being independently operated for independently carrying out the far-red light irradiation concurrently with red light at the red light irradiation step (A) or with blue light at the blue light irradiation step (B), or with red light and blue light at the red light irradiation step (A) and the blue light irradiation step (B), respectively. As specific operations of the illumination lamp 1, red light irradiation, blue light irradiation and far-red light irradiation can be concurrently or separately, or repeatedly, irradiated, and the time period of each irradiation can be adequately varied depending upon the kinds of plants.

As illustrated in Fig. 1, the light irradiation part 11 is provided with plural red light emitting elements 2, plural blue light emitting elements 3 and plural far-red light emitting elements 4. The light emitting elements 2, 3 and 4 exhibit approximately the same emission efficiency. In the plant cultivation lamp 1, as specifically illustrated in Fig. 1, the ratio in number of red light emitting elements 2, blue light emitting elements 3 and far-red light emitting elements 4 is 6:3:1.

Plural red light emitting elements 2, plural blue light emitting elements 3 and plural far-red light emitting elements 4 are arranged with equal intervals along straight lines (two straight lines in Fig. 1) extending in the length direction of the light irradiation part 11. The straight lines are substantially parallel to each other.

A ratio in number of red light emitting elements 2, blue light emitting elements 3 and far-red light emitting elements 4 in the plant cultivation lamp 1 can be varied freely depending upon the desired light emission intensities, and the numbers of the three kinds of light emitting elements may be the same or different, although the ratio in number of red light emitting elements 2, blue light emitting elements 3 and far-red light emitting elements 4 in the lamp 1 illustrated in Fig. 1 is 6:3:1.

The rate of plant growth sometimes varies depending upon the light emission intensity ratio of red light to blue light. For example, some plants exhibit enhanced rate of growth when the red light emission intensity is larger than the blue light emission intensity. For these plants, it is preferable to use a plant cultivating illumination lamp 1 having a light emitting part provided with a larger number of red light emitting elements 2 than blue light emitting elements 3. By using the lamp 1 provided with a larger number of red light emitting elements 2 than blue light emitting elements 3, the light emission intensity of red light can be easily made larger than that of blue light.

It is preferable that the numbers of red light emitting elements 2, blue light emitting elements 3 and far-red light emitting elements 4 in the illumination lamp 1 are such that the emission intensity of red light, the total emission intensity of blue light and the total emission intensity of far-red light are in the order of red light ≧ blue light ≧ far-red light. It is further preferable that a ratio of the total emission intensity of red light to the total emission intensity of blue light is in the range of 1:1 to 9:1, and a ratio of the total emission intensity of blue light to the total emission intensity of far-red light is in the range of 1:1 to 9:1.

By using a plant-cultivation illumination lamp 1 having a light irradiation part 11 having red light emitting elements 2, blue light emitting elements 3 and far-red light emitting elements 4 which can exhibit the above-mentioned emission intensity ratios of red light, blue light and far-infrared light, when appropriate amounts of current are applied to the respective light emitting elements, the desired emission intensities can be manifested so that the emission intensity of red light and the emission intensity of blue light are approximately the same as or larger than the emission intensity of far-red light ios of the three lights can be manifested.

The illumination lamp 1 is preferably such that an applied electrical current can be exactly adjusted and the ratios of emission intensities of the three kinds of lights can be easily and desirably varied depending upon the particular plants by precisely adjusting the amount of electrical current applied.

If the emission intensity ratio of blue light or red light to far-red light is smaller than the above-mentioned range, i.e., the relative emission intensity of far-red light is too large, the desired plant growth promotion effect is often difficult to attain. Similarly, if the emission intensity ratio of blue light to far-red light is larger than the above-mentioned range, i.e., the relative emission intensity of blue light is too large, the desired plant growth promotion effect is also often difficult to attain.

The light irradiation part of the illumination lamp facility as used in the present invention preferably has a mixed light emitting package such that red light emitting elements, blue light emitting elements and far-red light emitting elements are arranged in a single light emitting package. The mixed light emitting package preferably has a function such that the emission intensity of red light emitting elements, the emission intensity of blue light emitting elements and the emission intensity of far-red light are capable of being independently controlled.

The ratio of the total emission intensity of red light emitting elements to the total emission intensity of blue light emitting elements in the mixed light emitting package is preferably at least 1:1, more preferably in the range of 2:1 to 9:1, and especially preferably in the range of 2:1 to 5:1.

The total emission intensity of far-red light emitting elements is preferably approximately the same as or smaller than the total emission intensity of red light emitting elements, or approximately the same as or smaller than the total emission intensity of blue light emitting elements in the mixed light emitting package.

Conventional light emitting elements can be used as the red light emitting elements 2, the blue light emitting elements 3, and the far-red light emitting elements 4. For example, light emitting diode (LED) in which the desired wavelength can be easily selected and light energy within the effective wavelength region occupies a predominant part can be beneficially used. Laser diode (LD) and an electroluminescent (EL) element can also be used. The EL element used may be either an organic EL element or inorganic EL element. Light emitting diode is most preferable because of low cost and high emission efficiency.

Red light emitted from the red light emitting elements 2 preferably has a center wavelength within the range of 620 nm to 700 nm, more preferably within the range of 645 nm to 680. Blue light emitted from the blue light emitting elements 3 preferably has a center wavelength within the range of 400 nm to 480 nm.

Each of the red light and the blue light preferably has a wavelength region in the range of the center wavelength ± 30 nm, more preferably in the range of the center wavelength ± 20 nm, and especially preferably in the range of the center wavelength ± 10 nm.

Far-red light emitted from the far-red light emitting elements 4 preferably has a center wavelength within the range of 710 nm to 800 nm, especially preferably within the range of 720 nm to 780 nm.

The emission intensities of red light, blue light and far-red light which are emitted from the light irradiation part 11 are not particularly limited, but each emission intensity is preferably in the range of 1 to 1,000 µmol/m²s, more preferably 10 to 500 µmol/m²s, and especially preferably 30 to 300 µmol/m²s, as expressed by photosynthetic photon flux density (PPFD). The emission intensity ratios of red light, blue light and far-red light are preferably in the ranges mentioned above.

Illumination lamp facilities as preferably used for the plant cultivation are equipped with a control part. Emission intensities of red light, blue light and far-red light, emitted from the irradiation part 11, can be adequately controlled by varying the current value, applied to the red light emitting elements 2, blue light emitting elements 3 and the far-red light emitting elements, by the controlling part.

The illumination lamp facility equipped with the control part in the irradiation part having red light emitting elements, blue light emitting elements and far-red light emitting elements is also advantageous as compared with the conventional illumination lamp facility having red light emitting means, blue light emitting means and far-red light emitting means which are separately arranged, because the light control part can be easily and steadily arranged in the illumination lamp facility and undesirable deviation of the irradiation directions of red light, blue light and far-red light can be minimized.

The plant cultivating illumination lamp 1 as illustrated in Fig. 1 is provided with an electrode 41 for red light emitting elements 2, an electrode 42 for blue light emitting elements 3, and an electrode 43 for far-red light emitting elements 4, and further with a grand electrode 44 common for the red light emitting elements, blue light emitting elements and far-red light emitting elements. The plural red light emitting elements 2 are electrically connected by wires (not shown) to the electrode 41 for red light emitting elements 2. The plural blue light emitting elements 3 are electrically connected by wires (not shown) to the electrode 42 for blue light emitting elements 3. The plural far-red light emitting elements 4 are electrically connected by wires (not shown) to the electrode 43 for far-red light emitting elements 3.

The control part equipped in the illumination lamp facility 1 has a function of independently turning on and off the red light emitting elements 2, the blue light emitting elements 3 and the far-red light emitting elements 4 by supplying electric current, respectively, via the electrode 41 and the grand electrode 44 to the red light emitting elements 2, via the electrode 42 and the grand electrode 44 to the blue light emitting elements 3, and via the electrode 43 and the grand electrode 44 to the far-red light emitting elements 4.

The control part is provided with a lamp controller (i.e., light emission intensity-controlling means), which can turn on and off the red light emitting elements 2, the blue light emitting elements 3 and the far-red light emitting elements 4 so that the red light, the blue light and the far-red light are irradiated alternately or concurrently, and for a desired period of time. Thus, the light emission intensity ratios of red light, blue light and far-red light, irradiated from the light irradiation part 11, can be appropriately controlled so as to achieve the desired growth of plants.

### Plant Cultivation Method

The method of cultivating a plant according to the present invention will now be explained specifically and more in detail on an embodiment using the illumination lamp 1 as illustrated in Fig. 1.

The plant cultivation method of the present invention comprises a step (A) of irradiating a plant with a red light and a step (B) of irradiating a plant with a blue light, wherein the red light irradiation step (A) and the blue light irradiation step (B) are independently and separately carried out for a predetermined period of time, and far-red light is additionally irradiated concurrently either with red light at the red light irradiation step (A) or with blue light at the blue light irradiation step (B), or with red light and blue light at the red light irradiation step (A) and the blue light irradiation step (B), respectively.

In the case when far-red light is irradiated concurrently with red light at the red light irradiation step (A), far-red light can be irradiated concurrently with red light at at least part of the red light irradiation step (A), and most preferably at the whole red light irradiation step (A). Similarly, in the case when far-red light is irradiated concurrently with blue light at the blue light irradiation step (B), far-red light can be irradiated concurrently with blue light at at least part of the blue light irradiation step (B), and most preferably at the whole blue light irradiation step (B).

By the term "independently" as used herein, we mean that the red light irradiation step (A) and the blue light irradiation step (B) exist separately in the course of plant cultivation.

The procedure of independently carrying out the red light irradiation step (A) and the blue light irradiation step (B) brings about a desired plant growth effect, as compared with a plant cultivation procedure wherein red light and blue light are concurrently irradiated. The reason for which the desired enhanced plant growth can be attained by independently carrying out the red light irradiation step (A) and the blue light irradiation step (B), is not clear. But, it is presumed that the photosynthesis process caused by the red light is different from that caused by the blue light due to the fact that chlorophyll exhibits a red light absorption peak distinct from a blue light absorption peak, therefore, when red light and blue light are concurrently irradiated, the photosynthesis process caused by red light and the photosynthesis process caused by blue light undesirably interfere with each other.

By the term "predetermined period of time" as used herein, we mean an optional length of time within the course of plant cultivation. The maximum length of the predetermined period of time equals to the entire time length of the course of plant cultivation. The minimum length thereof can be voluntarily set provided that the desired plant growth-enhancing effect can be attained. The predetermined period of time can be expressed in units of hour, day or minute depending upon the particular length of time.

The red light irradiation step (A), the blue light irradiation step (B), and the step of irradiating far-red light concurrently with red light or blue light at the red light irradiation step (A) or the blue light irradiation step (B), respectively, are carried out independently at least once, preferably at least two times, for the predetermined period of time. In the case when the red light irradiation step (A), the blue light irradiation step (B) and the step of concurrent irradiation of far-red light with red light or blue light are carried out dividedly in two times or more, time length of each operation of the red light irradiation step (A), time length of each operation of the blue light irradiation step (B) and time length of each operation of the step of irradiating far-red light concurrently with red light or blue light are preferably at least 1 hour, more preferably in the range of 1 to 48 hours, and especially preferably in the range of 3 to 24 hours.

The red light irradiation step (A) and the blue light irradiation step (B) can be carried out either alternately and continuously, or intermittently with interposition of an operation of concurrently irradiating plant with red light and blue light between each operation of the red light irradiation step (A) and each operation of the blue light irradiation step (B), or with pause of irradiation between each operation of the red light irradiation step (A) and each operation of the blue light irradiation step (B).

Alternate flashing of red light irradiation and blue light irradiation by quickly repeating light flashing with a high frequency such as 1 Hz or higher is excluded from the light irradiation procedure adopted for independently carrying out the red light irradiation step (A) and the blue light irradiation step (B) for a predetermined period of time in the plant cultivation method according to the present invention.

In the alternate flashing of red light irradiation and blue light irradiation by quickly repeating light flashing with a high frequency such as 1 Hz or higher, the photosynthesis reaction and related reactions do not occur to the desired extent. This is because each flashing of red light irradiation and blue light irradiation occurs for a very short length of time which is insufficient for performing photosynthesis reaction and related reactions for achieving the plant growth effect. The plant growth effect achieved by the quick alternate flashing is similar to that achieved by the operation of concurrently irradiating red light with blue light.

The plant cultivation method of the present invention can be adopted for any period of time within the entire course of plant cultivation spanning from immediately after the germination of seeds or immediately after the plantation to the harvest.

The plants to be cultivated in the method of the present invention are not particularly limited, and this term means plants in a broad sense which include leaf plants, water plants, root plants, fruit plants, pluses, grains, seeds, algae, house plants, mosses and vegetable planktons.

In the cultivation of leaf vegetables, importance lies not only in promotion of growth of leaves by photosynthesis, but also in translocation of sugars, produced by photosynthesis, to fruits and roots. Additional irradiation of far-red light according to the present invention is believed to enhance the growth promotion and translocation of sugars.

### Examples

### Preparation of plants to be tested

In the following examples, reference example and comparative example, strawberries were cultivated and tested for evaluating the growth state.

Ten seedlings of strawberries were planted at equal intervals in a cultivation bed for hydroponic culture, to which an aqueous nutritious liquid was supplied.

### Example 1

The raised seedlings of strawberry for test were set in a cultivation bed placed in an environment-controlled hydroponic culture room wherein temperature and humidity were maintained at 18 to 22°C and 60%, respectively, and carbon dioxide concentration was controlled to 1,000 ppm. A commercially available nutritious liquid was supplied under standard conditions. The hydroponic bed was provided with a fluorescent LED lamp. The strawberries were irradiated with lights under the following conditions.

The fluorescent LED lamp used had a light emitting part provided with 240 red light emitting elements, 120 blue light emitting elements, and 40 far-red light emitting elements. The red light emitting elements emitted red light having a center wavelength of approximately 660 nm and a wavelength region of 640-680 nm, the blue light emitting elements emitted blue light having a center wavelength of approximately 450 nm and a wavelength region of 430-470 nm, and the far-red light emitting elements emitted far-red light having a center wavelength of approximately 735 nm and a wavelength region of 720-750 nm.

The fluorescent LED lamp used further had a light control part capable of independently turning on and off the red light emitting elements, the blue light emitting elements and the far-red light emitting elements. The emission intensities of the light emitting elements were adjusted so that all of the emission intensities of the three kinds of lights were approximately the same.

The red light emitting elements exhibited a total emission intensity, i.e., a total photosynthetic photon flux density (PPFD), of 240 µmol/m²•s. The blue light emitting elements exhibited a total PPFD of 120 µmol/m²•s. The far-red light emitting elements exhibited a total PPFD of 40 µmol/m²•s. Thus, the total emission intensity ratio of red light, blue light and far-red light was 6:3:1.

The red light irradiation step and the blue light irradiation step were alternately and repeatedly carried out for 12 hours for each irradiation time per day, i.e., each light irradiation step was carried out separately and continuously over a period of 12 hours per day. Far-red light was irradiated for 12 hours concurrently with the red light at the red light irradiation step. There was no time for which the light irradiation was ceased.

When 150 days elapsed, the light irradiation was stopped and grown strawberries were harvested.

The cultivation results are shown in Table 1, below. The days spanning from the start of culture under irradiation to the day on which most strawberries bloomed were observed and expressed as "days to blooming" in Table 1. The total weight of strawberry fruits collected for 120 days growth duration and for 150 days growth duration were measured, and was expressed by average yield (g) per each strawberry.

**Table 1**

| Examples, Comparative Examples | Irradiation time (hours per day) | | Cultivation results | | |
|---|---|---|---|---|---|
| | | | Days to blooming (days) | Yield of berry | |
| | | | | 120days growth duration | 150days growth duration |
| Ex.1 | Blue 12h | (Red+FR) 12h | 42 | 590 | 600 |
| Ex.2 | (Blue+FR) 12h | (Red+FR) 12h | 44 | 550 | 610 |
| Ex.3 | (Blue+FR) 12h | Red 12h | 44 | 480 | 630 |
| Ref. Ex.1 | Blue 12h | Red 12h | 46 | 430 | 580 |
| Co.Ex.1 | (Blue+Red) 16h | Non-irradiation 8h | 56 | 170 | 420 |

| | | | | | |
|---|---|---|---|---|---|
| Note; FR: Far-red light | | | | | |

### Example 2

By the same procedures as described in Example 1, strawberries were cultivated except that far-red light was irradiated for 12 hours simultaneously with the red light irradiation at the red light irradiation step, and for 12 hours simultaneously with the blue light irradiation at the blue light irradiation step. All other cultivation conditions remained substantially the same as in Example 1. The cultivation results are shown in Table 1.

### Example 3

By the same procedures as described in Example 1, strawberries were cultivated except that far-red light was irradiated for 12 hours concurrently with blue light at the blue light irradiation step. All other cultivation conditions remained substantially the same as in Example 1. The cultivation results are shown in Table 1.

### Reference Example 1

By the same procedures as described in Example 1, strawberries were cultivated except that far-red light was not irradiated. Further, the red light irradiation step and the blue light irradiation step were alternately and repeatedly carried out for 12 hours for each irradiation time per day, i.e., each light irradiation step was carried out separately and continuously over a period of 12 hours per day. All other cultivation conditions remained substantially the same as in Example 1. The cultivation results are shown in Table 1.

### Comparative Example 1

By the same procedures as described in Example 1, strawberries were cultivated except that far-red light was not irradiated, and further that the red light irradiation step and the blue light irradiation step were concurrently and continuously carried out for 16 hours per day; and the lamp was left put out for 8 hours per day. The concurrent irradiation of red light and blue light, and the lamp leaving put out were repeated for 150 days. All other cultivation conditions remained substantially the same as in Example 1. The cultivation results are shown in Table 1.

As seen from Table 1, in Example 1, the growth of strawberries was promoted most markedly, and thus, the days to blooming was short, and harvest of strawberry fruits was almost completed when 120 days elapsed. In Example 3, the growth of strawberries was somewhat slow as compared with Example 1, but, the total weight of strawberry fruits collected after the 150 days growth duration was largest. The growth promotion and the total yield of strawberry fruits in Example 2 were intermediate between Example 1 and Example 3. Thus, the growth promotion and the total yield of fruits were satisfactory in the cultivation method according to the present invention.

In Reference Example 1, the days to blooming were long and approximately 150 days were required for harvest, and the total weight of strawberry fruits was relatively small. In Comparative Example 1, the rate of growth was slow and the total weight of strawberry fruits after the 150 days duration was very small.

## Claims

1. A method of cultivating a plant comprising a step (A) of irradiating a plant with a red light and a step (B) of irradiating a plant with a blue light, wherein the red light irradiation step (A) and the blue light irradiation step (B) are independently and separately carried out for a predetermined period of time under cultivation conditions such that far-red light is additionally irradiated concurrently either
with red light at the red light irradiation step (A); or with blue light at the blue light irradiation step (B); or with red light at the red light irradiation step (A) and blue light at the blue light irradiation step (B).

2. The method of cultivating a plant according to claim 1, wherein, when far-red light is additionally irradiated concurrently with red light at the red light irradiation step (A), the emission intensity of red light at said step (A) of concurrent red light/far-red light irradiation is larger than the emission intensity of far-red light at said step (A) of concurrent red light/far-red light irradiation, and a ratio of the emission intensity of red light at said step (A) of concurrent red light/far-red light irradiation to the total light emission intensity at said step (A) of concurrent red light/far-red light irradiation is at least 50%.

3. The method of cultivating a plant according to claim 1, wherein, when far-red light is additionally irradiated concurrently with blue light at the blue light irradiation step (B), the emission intensity of blue light at said step (B) of concurrent blue light/far-red light irradiation is larger than the emission intensity of far-red light at said step (B) of concurrent blue light/far-red light irradiation, and a ratio of the emission intensity of blue light at said step (B) of concurrent blue light/far-red light irradiation to the total light emission intensity at said step (B) of concurrent blue light/far-red light irradiation is at least 50%.

4. The method of cultivating a plant according to any one of claims 1 to 3, wherein the red light has a center wavelength in the range of 620 nm to 700 nm, the blue light has a center wavelength in the range of 400 nm to 480 nm, and the far-red light has a center wavelength in the range of 720 nm to 780 nm.

5. The method of cultivating a plant according to any one of claims 1 to 4, wherein the red light is irradiated by using a semiconductor light emitting element having an AlGaInP light emitting layer, the blue light is irradiated by using a semiconductor light emitting element having a GaInN light emitting layer, and the far-red light is irradiated by using a semiconductor light emitting element having an AlGaAs light emitting layer.

6. The method of cultivating a plant according to any one of claims 1 to 5, wherein the red light irradiation step (A), the blue light irradiation step (B), and the step of concurrent irradiation of far-red light with red light or with blue light are alternately and repeatedly carried out over a period of at least one hour for each irradiation time.

7. The method of cultivating a plant according to any one of claims 1 to 6, wherein the red light irradiation step (A), the blue light irradiation step (B), and the step of concurrent irradiation of far-red light with red light or with blue light are carried out using an illumination lamp facility having red light emitting elements, blue light emitting elements and far-red light emitting elements, which are capable of being independently operated, and wherein a ratio of the total emission intensity of red light to the total emission intensity of blue light is in the range of 1:1 to 9:1, and a ratio of the total emission intensity of blue light to the total emission intensity of far-red light is in the range of 1:1 to 9:1.

## Patentansprüche

1. Verfahren zum Kultivieren einer Pflanze, welches eine Stufe (A) der Belichtung einer Pflanze mit rotem Licht und eine Stufe (B) der Belichtung einer Pflanze mit blauem Licht umfasst, wobei die Stufe (A) der Belichtung mit rotem Licht und die Stufe (B) der Belichtung mit blauem Licht unabhängig und getrennt voneinander über einen festgelegten Zeitraum durchgeführt werden unter Kultivierungsbedingungen, bei denen mit Fernrotlicht zusätzlich gleichzeitig entweder mit rotem Licht in der Stufe (A) der Belichtung mit rotem Licht oder mit blauem Licht in der Stufe (B) der Belichtung mit blauem Licht oder mit rotem Licht in der Stufe (A) der Belichtung mit rotem Licht und blauem Licht in der Stufe (B) der Belichtung mit blauem Licht belichtet wird.

2. Verfahren zum Kultivieren einer Pflanze nach Anspruch 1, wobei, wenn mit Fernrotlicht zusätzlich gleichzeitig mit rotem Licht der Stufe (A) der Belichtung mit Rotlicht belichtet wird, die Emissionsintensität von rotem Licht in der Stufe (A) der gleichzeitigen Belichtung mit Rotlicht/Fernrotlicht höher ist als die Emissionsintensität des Fernrotlichts in der Stufe (A) der gleichzeitigen Belichtung mit Rotlicht/Fernrotlicht, und das Verhältnis der Emissionsintensität von rotem Licht in der Stufe (A) der gleichzeitigen Belichtung mit Rotlicht/Fernrotlicht zu der Gesamtlichtemissionsintensität in der Stufe (A) der gleichzeitigen Belichtung mit Rotlicht/Fernrotlicht mindestens 50 % ist.

3. Verfahren zum Kultivieren einer Pflanze nach Anspruch 1, wobei, wenn fernrotes Licht zusätzlich und gleichzeitig mit blauem Licht in der Stufe (B) der Belichtung mit blauem Licht belichtet wird, die Emissionsintensität von blauem Licht in der Stufe (B) der gleichzeitigen Belichtung mit Blaulicht/Fernrotlicht höher ist als die Emissionsintensität von fernrotem Licht in der Stufe (B) der gleichzeitigen Belichtung mit Blaulicht/Fernrotlicht und der Anteil der Emissionsintensität von blauem Licht in der Stufe (B) der gleichzeitigen Belichtung mit Blaulicht/Fernrotlicht zu der Gesamtlichtemissionsintensität der Stufe (B) der gleichzeitigen Belichtung mit Blaulicht/Fernrotlicht mindestens 50 % ist.

4. Verfahren zum Kultivieren einer Pflanze nach einem der Ansprüche 1 bis 3, wobei das rote Licht eine zentrale Wellenlänge im Bereich von 600 nm bis 700 nm aufweist, das blaue Licht eine zentrale Wellenlänge im Bereich von 400 nm bis 480 nm aufweist und das Fernrotlicht eine zentrale Wellenlänge im Bereich von 720 nm bis 780 nm aufweist.

5. Verfahren zum Kultivieren einer Pflanze nach einem der Ansprüche 1 bis 4, wobei das rote Licht unter Einsatz eines Halbleiterlichtemissionselements mit einer AlGaInP-Licht-emissionsschicht gestrahlt wird, das blaue Licht unter Einsatz eines Halbleiterlichtemissionselements mit einer GaInN-Lichtemissionsschicht gestrahlt wird und das Fernrotlicht unter Einsatz eines Halbleiterlichtemissionselements mit einer AlGaAs-Lichtemissionsschicht gestrahlt wird.

6. Verfahren zum Kultivieren einer Pflanze nach einem der Ansprüche 1 bis 5, wobei die Stufe (A) des Belichtens mit rotem Licht, die Stufe (B) des Belichtens mit blauem Licht und die Stufe des gleichzeitigen Belichtens von Fernrotlicht und rotem Licht oder blauem Licht abwechselnd und wiederholt über einen Zeitraum von mindestens einer Stunde für jede Belichtungszeit durchgeführt werden.

7. Verfahren zum Kultivieren einer Pflanze nach einem der Ansprüche 1 bis 6, wobei die Stufe (A) der Belichtung mit rotem Licht, die Stufe (B) der Belichtung mit blauem Licht und die Stufe der gleichzeitigen Belichtung mit Fernrotlicht und rotem Licht oder blauem Licht unter Einsatz einer Beleuchtungslampenvorrichtung mit rotlichtemittierenden Elementen, blaulichtemittierenden Elementen und Fernrotlichtemissionselementen, die unabhängig voneinander betrieben werden können, durchgeführt werden, und wobei das Verhältnis der Gesamtemissionsintensität von rotem Licht zu der Gesamtemissionsintensität von blauem Licht im Bereich von 1:1 bis 9:1 ist und der Anteil der Gesamtemissionsintensität von blauem Licht zu der Gesamtemissionsintensität von Fernrotlicht im Bereich von 1:1 bis 9:1 ist.

## Revendications

1. Procédé pour cultiver une plante comprenant une étape (A) d'irradiation d'une plante avec une lumière rouge et une étape (B) d'irradiation d'une plante avec une lumière bleue, dans lequel l'étape d'irradiation de lumière rouge (A) et l'étape d'irradiation de lumière bleue (B) sont exécutées indépendamment et séparément pendant une période de temps prédéterminée dans des conditions de culture de telle sorte qu'une lumière rouge lointain soit additionnellement rayonnée simultanément soit avec une lumière rouge lors de l'étape d'irradiation de lumière rouge (A); soit avec une lumière bleue lors de l'étape d'irradiation de lumière bleue (B); soit avec une lumière rouge lors de l'étape d'irradiation de lumière rouge (A) et une lumière bleue lors de l'étape d'irradiation de lumière bleue (B).

2. Procédé pour cultiver une plante selon la revendication 1, dans lequel, lorsqu'une lumière rouge lointain est additionnellement rayonnée simultanément avec une lumière rouge lors de l'étape d'irradiation de lumière rouge (A), l'intensité d'émission de lumière rouge lors de ladite étape (A) d'irradiation simultanée de lumière rouge/lumière rouge lointain est supérieure à l'intensité d'émission de lumière rouge lointain lors de ladite étape (A) d'irradiation simultanée de lumière rouge/lumière rouge lointain, et un rapport entre l'intensité d'émission de lumière rouge lors de ladite étape (A) d'irradiation simultanée de lumière rouge/lumière rouge lointain et l'intensité d'émission de lumière totale lors de ladite étape (A) d'irradiation simultanée de lumière rouge/lumière rouge lointain est d'au moins 50 %.

3. Procédé pour cultiver une plante selon la revendication 1, dans lequel, lorsqu'une lumière rouge lointain est additionnellement rayonnée simultanément avec une lumière bleue lors de l'étape d'irradiation de lumière bleue (B), l'intensité d'émission de lumière bleue lors de ladite étape (B) d'irradiation simultanée de lumière bleue/lumière rouge lointain est supérieure à l'intensité d'émission de lumière rouge lointain lors de ladite étape (B) d'irradiation simultanée de lumière bleue/lumière rouge lointain, et un rapport entre l'intensité d'émission de lumière bleue lors de ladite étape (B) d'irradiation simultanée de lumière bleue/lumière rouge lointain et l'intensité d'émission de lumière totale lors de ladite étape (B) d'irradiation simultanée de lumière bleue/lumière rouge lointain est d'au moins 50 %.

4. Procédé pour cultiver une plante selon l'une quelconque des revendications 1 à 3, dans lequel la lumière rouge présente une longueur d'onde centrale comprise dans la gamme de 620 nm à 700 nm, la lumière bleue présente une longueur d'onde centrale comprise dans la gamme de 400 nm à 480 nm, et la lumière rouge lointain présente une longueur d'onde centrale comprise dans la gamme de 720 nm à 780 nm.

5. Procédé pour cultiver une plante selon l'une quelconque des revendications 1 à 4, dans lequel la lumière rouge est rayonnée en utilisant un élément électroluminescent semi-conducteur présentant une couche électroluminescente d'AlGaInP, la lumière bleue est rayonnée en utilisant un élément électroluminescent semi-conducteur présentant une couche électroluminescente de GaInN, et la lumière rouge lointain est rayonnée en utilisant un élément électroluminescent semi-conducteur présentant une couche électroluminescente d'AlGaAs.

6. Procédé pour cultiver une plante selon l'une quelconque des revendications 1 à 5, dans lequel l'étape d'irradiation de lumière rouge (A), l'étape d'irradiation de lumière bleue (B) et l'étape d'irradiation simultanée de lumière rouge lointain avec une lumière rouge ou une lumière bleue sont exécutées de façon alternée et répétée sur une période de temps d'au moins une heure pour chaque phase d'irradiation.

7. Procédé pour cultiver une plante selon l'une quelconque des revendications 1 à 6, dans lequel l'étape d'irradiation de lumière rouge (A), l'étape d'irradiation de lumière bleue (B) et l'étape d'irradiation simultanée de lumière rouge lointain avec une lumière rouge ou une lumière bleue sont exécutées en utilisant une installation de lampe d'éclairage comprenant des éléments d'émission de lumière rouge, des éléments d'émission de lumière bleue et des éléments d'émission de lumière rouge lointain, qui peuvent être activés indépendamment, et dans lequel un rapport entre l'intensité d'émission totale de lumière rouge et l'intensité d'émission totale de lumière bleue est compris dans la gamme de 1:1 à 9:1, et un rapport entre l'intensité d'émission totale de lumière bleue et l'intensité d'émission totale de lumière rouge lointain est compris dans la gamme de 1:1 à 9:1.
